# EUROPÄISCHE PATENTSCHRIFT

(11) **EP 3 609 597 B1**
(45) Veröffentlichungstag und Bekanntmachung des Hinweises auf die Patenterteilung: **12.05.2021**
(21) Anmeldenummer: 18725405.7
(22) Anmeldetag: 04.04.2018
(51) Int. Cl.: B01D 35/027, B01D 35/147, B01D 29/23

(54) **FILTERVORRICHTUNG**
FILTER DEVICE
DISPOSITIF DE FILTRATION

(30) Priorität: 11.04.2017 DE 102017003489
(43) Veröffentlichungstag der Anmeldung: 19.02.2020
(73) Patentinhaber: RT-Filtertechnik Gmbh, 88048 Friedrichshafen (DE)
(72) Erfinder: BAUTZ, Marco, 88045 Friedrichshafen (DE); DIETER, Mathias, 66123 Saarbrücken (DE)
(74) Vertreter: Bartels und Partner, Patentanwälte
(86) Internationale Anmeldenummer: PCT/EP2018/058599
(87) Internationale Veröffentlichungsnummer: WO 2018/189008

(56) Entgegenhaltungen:
- EP-A2- 2 027 906
- WO-A1-2009/019442
- DE-A1-102015 003 604
- US-A1- 2010 155 321
- US-A1- 2013 248 464
- US-A1- 2016 023 142

## Beschreibung

Die Erfindung betrifft eine Filtervorrichtung mit den Merkmalen im Oberbegriff von Anspruch 1.

Filtervorrichtungen dieser Art sind Stand der Technik und kommen in einer Vielzahl von Bauweisen und Ausgestaltungen für die Filterung von Verfahrensflüssigkeiten, Druckflüssigkeiten, wie Hydrauliköle, flüssige Kraft- und Schmierstoffe, zur Aufbereitung flüssiger Medien und dergleichen zum Einsatz. Aus der Vielzahl der bekannten Filtervorrichtungen zeigt die DE 10 2015 003 604 A1 ein Beispiel einer solchen Filtervorrichtung, die als sog. In-Tank-Filtervorrichtung ausgebildet ist. Die Betriebssicherheit solcher Filtervorrichtungen hängt in ganz starkem Maße davon ab, dass die jeweils eingebauten oder bei nach bestimmten Betriebsphasen erfolgenden Austauschvorgängen neu eingesetzten Filterelemente genau den vorgegebenen Spezifikationen, wie Filterfeinheit, Filterfläche und anderen Parametern, entsprechen. Eine Fehlbestückung der betreffenden Filtervorrichtung mit einem ungeeigneten Filterelement und eine dadurch verminderte oder gar fehlende Leistungsfähigkeit, durch die es zu Betriebsstörungen oder gar zu Schäden kommen kann, führt insbesondere bei teuren technischen Anlagen zu erheblichen wirtschaftlichen Einbußen.

Weitere Filtervorrichtungen gehen aus der US 2016/0023142 A1, der EP 2 027 906 A2, der WO 2009/019442 A1, der US 2013/0248464 A1 und der US 2010/0155321 A1 hervor.

Im Hinblick auf diese Problematik stellt sich die Erfindung die Aufgabe, eine Filtervorrichtung zur Verfügung zu stellen, die besonders betriebssicher betreibbar ist.

Erfindungsgemäß ist diese Aufgabe durch eine Filtervorrichtung gelöst, die die Merkmale des Patentanspruchs 1 in seiner Gesamtheit aufweist.

Demgemäß zeichnet sich die Erfindung dadurch aus, dass die jeweils eingesetzte Dichteinrichtung der Form der Schlüsselteile nachfolgt.

Es ist ferner vorgesehen, dass das in der Umhausung austauschbar aufnehmbare Filterelement mit mindestens zwei Schlüssel- oder Schlossteilen in korrespondierend ausgebildete Schloss- bzw. Schlüsselteile der Umhausung eingreift, wobei die Schlüssel- oder Schlossteile jeweils paarweise einander zugeordnet in Eingriff miteinander als
- Codiermittel und/oder
- Festlegemittel und/oder
- Funktionsmittel und/oder
- Nachbauschutzmittel
dienen.

Dieses codierte, auf mechanischem Eingriff zwischen Filterelement und Umhausung basierende Schlüssel-Schloss-System gewährleistet ein Höchstmaß an Betriebssicherheit, weil es gleichzeitig mehrere mögliche Arten von Fehlbestückungen ausschließt. Die Codierung kann die Filterfläche, die Filterfeinheit und die Differenzdrucksicherheit darstellen, was den Einsatz von Filterelementen mit für den jeweiligen Einsatz nicht geeigneter Leistung ausschließt. Entsprechendes gilt für den Ausschluss von Filterelementen mit einem für den jeweiligen Verwendungszweck ungeeigneten Filtermaterial. Der mechanische Eingriff zwischen Schlüssel- und Schlossteilen kann als Festlegemittel eine Verdrehsicherung für das Filterelement bilden. Ferner bildet die Codierung einen Schutz gegen den Einsatz nachgebauter Fremderzeugnisse mit für den jeweiligen Zweck ungeeigneter Spezifikation.

Die jeweiligen Schlüssel- oder Schlossteile des Filterelements sind an einem Kranz angeordnet, der an eine Endkappe des Filterelements anschließt und bevorzugt einstückiger Bestandteil der Endkappe ist, wobei die Umhausung für die Aufnahme des Kranzes eine der Außenkontur dieses Kranzes nachfolgende Aufnahme aufweist.

Mit Vorteil kann die Anordnung hierbei so getroffen sein, dass das jeweilige Schlüssel- oder Schlossteil des Kranzes aus vor- oder rückspringenden Anlageteilen besteht, die in rück- bzw. vorspringende Anlageteile der Aufnahme der Umhausung bei aufgenommenem Filterelement eingreifen und/oder dass zusätzlich oder alternativ als weiteres Schlüssel- und/oder Schlossteil die Außenkontur des Kranzes sowie die Aufnahme der Umhausung, zumindest teilweise, einem aufeinander abgestimmten Polygonzug nachfolgen. Bei diesen Ausgestaltungen ist der Einbau des Filterelements in die Aufnahme der Umhausung bei nicht übereinstimmender Codierung verhindert.

Bei vorteilhaften Ausführungsbeispielen ist der Kranz über eine stegartige Verbindungseinrichtung mit der einen Endkappe verbunden und steht in axialer sowie radialer Richtung über die an der Endkappe für das Elementmaterial gebildete Aufnahme vor.

Mit besonderem Vorteil kann der Kranz auswechselbar gegen denselben oder einen anderen Kranz mit anders ausgebildeten und/oder angeordneten Schlüssel- oder Schlossteilen an der stegartigen Verbindungseinrichtung des Filterelements festlegbar sein. Dadurch lassen sich Endkappen rationell als Gleichteile für Filterelemente mit unterschiedlichsten Spezifikationen und Leistungsparametern fertigen und nachträglich mit der entsprechenden Codierung versehen, indem der die betreffende Codierung enthaltende Kranz angebracht wird.

Ebenso kann die jeweils der Form des Kranzes angepasste Aufnahme der Umhausung tauschbar an dieser festgelegt sein.

Mit besonderem Vorteil kann die Anordnung derart getroffen sein, dass der Kranz des Filterelements einen in sich geschlossenen Außenring bildet, der außenumfangsseitig das jeweilige Schlüssel- oder Schlossteil vor- bzw. rückspringend aufweist oder als Polygonzug realisiert ist.

Zusätzlich kann an der unteren, freien Stirnseite des Kranzes eine weitere Dichteinrichtung vorhanden sein, die das Innere eines Filtertopfes als Teil der Umhausung gegenüber der Umgebung abdichtet.

Als Schlüsselteile können vorspringende Nasen am Kranz vorgesehen sein, die in korrespondierend ausgebildete, rückspringende Nasenaufnahmen in der Aufnahme der Umhausung aufnehmbar sind.

Für die Unterscheidung mehrerer Arten von Filterelementen können als Codiermittel für eine Art von Filterelementen bestimmte Schlüssel- und/oder Schlossteile zum Einsatz kommen, die sich zumindest teilweise von Schlüssel- oder Schlossteilen einer mindestens weiteren Art von Filterelement unterscheiden. Hierbei können die korrespondierenden Schloss- und/oder Schlüsselteile der Aufnahme der Umhausung derart in einer Mehrzahl vorhanden sein, dass sich zumindest zwei voneinander verschiedene Arten von Filterelementen in der gleichen Umhausung aufnehmen lassen.

Als Festlegemittel können die Schlüssel- oder Schlossteile des auswechselbaren Filterelements in die korrespondierend ausgebildeten Schloss- bzw. Schlüsselteile an der Umhausung derart eingreifen, dass eine axiale und/ oder radiale Lagesicherung des Filterelements in der Umhausung erreicht ist.

Mit besonderem Vorteil können als Funktionsmittel solche zur Übertragung von Fluid, Energie oder Information dienen, vorzugsweise in Form von Leitungen oder Leitungsabschnitten, die über einzelne Schlüssel- oder Schlossteile von Filterelement und/oder dessen Endkappe führen und die die Funktion von Anschlussteilen, auch in Form von Stecker- und Buchsenteilen, übernehmen. Beispielsweise kann über Leitungen, Leitungsabschnitte oder Steckerteile eine Übertragung des am Filterelement herrschenden Differenzdruckes an eine Druckmesseinrichtung vorgesehen sein.

Als Nachbauschutz lassen die Schlüssel- und/oder Schlossteile der Umhausung nur den Einbau von Filterelementen mit korrespondierend ausgebildeten Schloss- bzw. Schlüsselteilen zu. Des Weiteren können für ein Filterelement mindestens zwei voneinander verschiedene Mittel vorgesehen sein, wie ein Funktions- und ein Festlegemittel. Auch kann ein von der Kontur her gleich aussehendes Mittel des Filterelements mehrere Aufgaben wahrnehmen, wie die eines Codier-, eines Festlege-, eines Funktions- oder eines Nachbauschutzmittels.

Gegenstand der Erfindung ist auch ein Filterelement, das insbesondere für eine Filtervorrichtung nach einem der Ansprüche 1 bis 13 vorgesehen ist und die Merkmale des Patentanspruchs 14 aufweist.

Nachstehend ist die Erfindung anhand von in der Zeichnung dargestellten Ausführungsbeispielen im Einzelnen erläutert. Es zeigen:
- Fig. 1: eine in vertikaler Zentralebene aufgeschnitten gezeichnete perspektivische Schrägansicht eines Ausführungsbeispiels der erfindungsgemäßen Filtervorrichtung;
- Fig. 2: eine auseinandergezogen gezeichnete perspektivische Schrägansicht des Ausführungsbeispiels;
- Fig. 3: eine in größerem Maßstab gezeichnete perspektivische Schrägansicht, in der das Ausführungsbeispiel ohne Deckelteil und mit nur teilweise eingesetztem Filterelement dargestellt ist;
- Fig. 4: eine perspektivische Schrägansicht eines gesondert dargestellten Gehäusekopfes, der die Aufnahme für ein Filterelement und ein Bestandteil der Umhausung der Filtervorrichtung bildet;
- Fig. 5: eine perspektivische Schrägansicht einer Ausführungsform eines Filterelements für den Einsatz bei der erfindungsgemäßen Filtervorrichtung;
- Fig. 6: eine perspektivische Schrägansicht einer gesondert dargestellten Endkappe des Filterelements von Fig. 5;
- Fig. 7: eine perspektivische Schrägansicht eines mit codierten Schlüsselteilen versehenen Kranzes, der an der einen Endkappe eines Filterelements gemäß einem Ausführungsbeispiel der Erfindung festlegbar ist; und
- Fig. 8 und 9: der Fig. 7 entsprechende Schrägansichten des mit unterschiedlichen Codierungen versehenen Kranzes.

Mit Bezug auf die beigefügten Zeichnungen ist die Erfindung am Beispiel einer sog. In-Tank-Filtervorrichtung erläutert, bei der das Gehäuse eine Umhausung 3 in Form eines verhältnismäßig dünnwandigen, hohlen Kreiszylinders aufweist, der sich an das untere Ende eines Filterkopfes 5 anschließt.

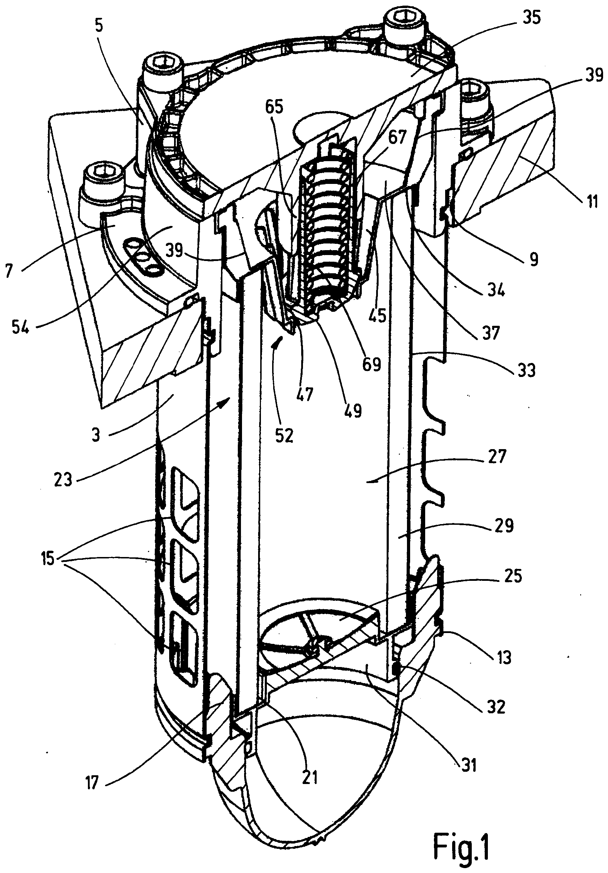

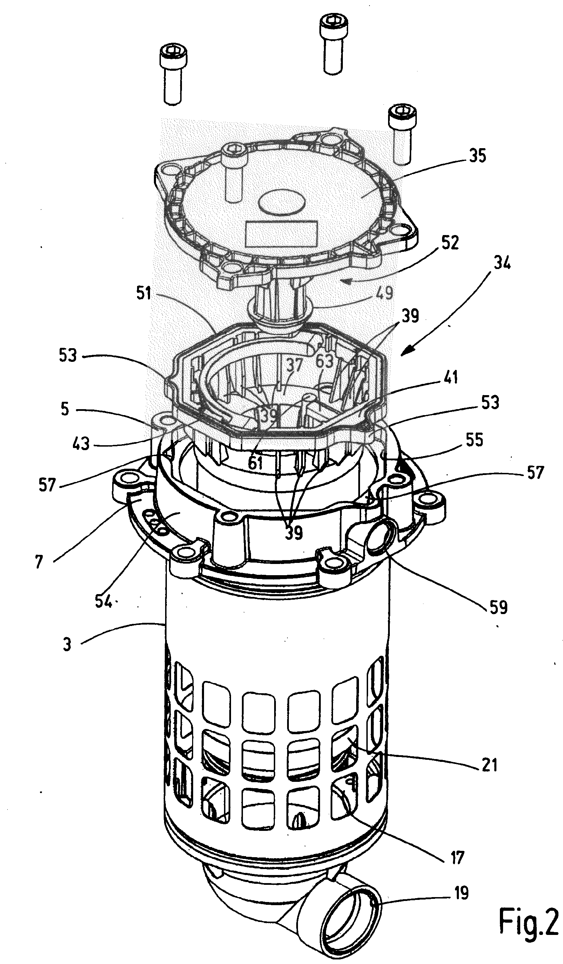

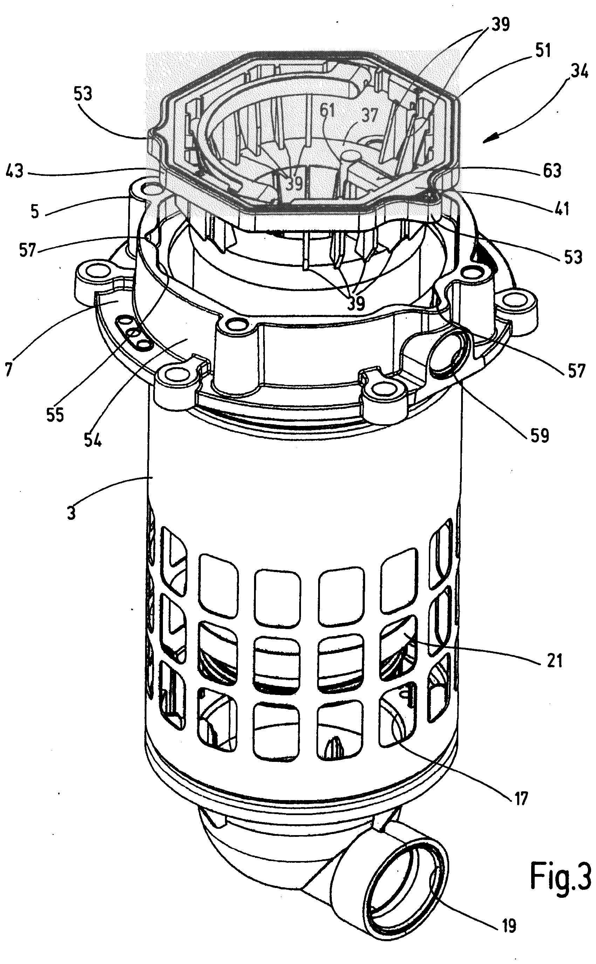

An diesem befindet sich außenseitig ein Befestigungsflansch 7, mit dem der Filterkopf 5 am Rand einer Öffnung 9 an der oberen Wand 11 eines im Übrigen nicht dargestellten Tanks derart anbringbar ist, dass sich die Umhausung 3 in Vertikalrichtung ins Innere des Tanks erstreckt. Die Länge der Umhausung 3 ist derart bemessen, dass sich das untere Ende 13 im Bereich des niedrigsten, im Betrieb zu erwartenden Fluidniveaus befindet. Im an das untere Ende 13 anschließenden Längenbereich ist die Umhausung 3 mit Durchbrüchen 15 versehen, von denen lediglich in Fig. 1 einige beziffert sind. Am unteren Ende 13 ist die Umhausung 3 mit einem Ringkörper 17 verbunden, insbesondere verbördelt, an den sich ein Anschlussstutzen 19 anschließt, s. Fig. 2 und 3, der für den Betrieb der Vorrichtung den Unfiltrateingang bildet, der durch die (nicht gezeigte) Tankwand nach außen geführt ist.

Der Ringkörper 17 bildet an seiner Innenseite die Elementaufnahme für die untere Endkappe 21 eines Filterelements 23. Diese Endkappe 21 weist einen zentralen Durchgang 25 auf, über den beim Betrieb das vom Anschlussstutzen 19 her einströmende Unfiltrat zum inneren Filterhohlraum 27 gelangt, der vom Hohlzylinder eines Filtermaterials 29 umgeben ist und die Unfiltratseite bildet. Für die Abdichtung der Filtratseite gegenüber der Außenseite des Filtermaterials 29, die die Filtratseite bildet, weist die untere Endkappe 21 einen nach unten axial vorstehenden, ringförmigen Ansatz 31 auf, an dem ein Dichtring 32 die Abdichtung am Ringkörper 17 bildet.

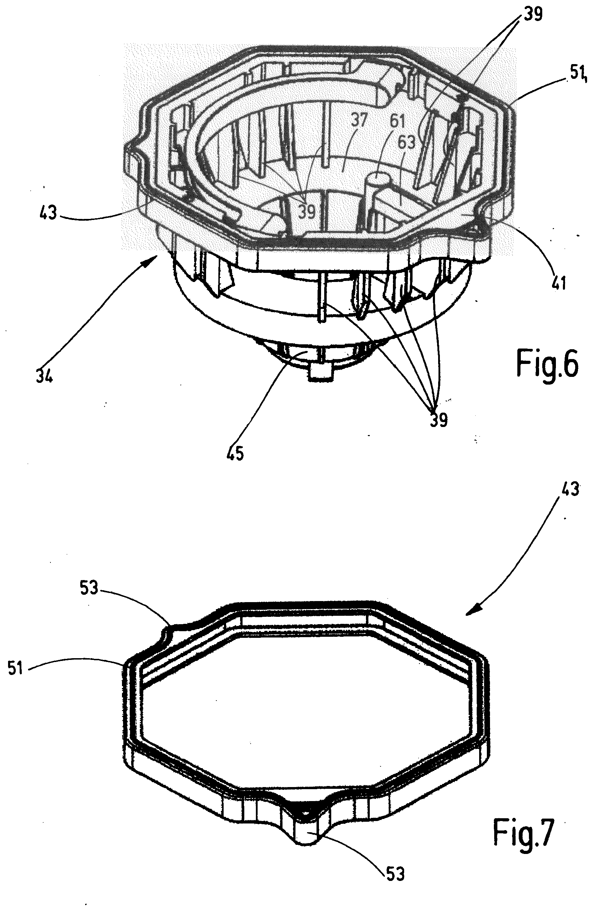

Als Einfassung für das obere Ende des Filtermaterials 29, das an seiner Außenseite von einem perforierten Stützrohr 33 umgeben ist, ist eine obere Endkappe 34 vorgesehen, die in Fig. 6 gesondert dargestellt ist. Der die obere Endkappe 34 umgebende Filterkopf 5 bildet an seiner Innenseite die Aufnahme für den gegenseitigen Eingriff von am Kopf 5 und an der Endkappe 34 vorgesehenen Anlageteilen. Wie die Fig. 1 und 2 zeigen, bildet ein mit dem Filterkopf 5 verschraubbares Deckelteil 35 den oberen Abschluss der Vorrichtung nach außen.

Die Bauweise der Endkappe 34 entspricht im großen Ganzen der in dem oben genannten Dokument DE 10 2015 003 604 A1 gezeigten Endkappe 43, die aus einem Kunststoffwerkstoff spritzgeformt ist, wobei der wesentliche Unterschied in der unterschiedlichen Ausbildung des oberen Umfangsabschnitts der Endkappe 34 besteht, der in dem genannten Dokument als Aufnahmekrone 49 bezeichnet ist. In Übereinstimmung mit der genannten, bekannten Lösung weist die Endkappe 34 als zentralen Bestandteil ein ebenflächiges Kreisringteil 37 auf, das die Einfassung für das an der Unterseite des Ringteils 37 anliegende obere Ende des Hohlkörpers des Filtermaterials 29 bildet. Den Außenumfang des Kreisringteils 37 umgibt ein Kranz aus verteilt angeordneten plattenartigen Stegen 39, deren Ebenen sich in Radialrichtung erstrecken und die die Träger für einen oberen, unrunden Wandabschnitt 41 bilden. Genauer gesagt verläuft der unrunde Wandabschnitt 41 entlang eines beim vorliegenden Beispiel achteckigen Polygonzuges. Dieser trägt an seinem Außenumfang einen Kranz 43, an dem sich, entsprechend einer Codierung, Anlageteile befinden, die für ein Schlüssel/ Schloss-System Schlüsselteile bilden. An der Unterseite des Kreisringteils 37 schließt sich an dessen Innenumfang ein Führungsteil 45 an, das die Form eines sich koaxial ins Innere des Filterhohlraums 27 erstreckenden, hohlen Konus besitzt. An seinem verjüngten Ende besitzt dieser Konuskörper eine Öffnung 47, deren Rand die Dichtfläche für einen Ventilkörper 49 eines Bypassventils 52 (Fig. 2) bildet, worauf noch eingegangen wird. An der Außenseite des Wandabschnitts 41 bildet der Kranz 43 einen in sich geschlossenen Außenring, der an seiner oberen, freien Stirnseite, die in einer Radialebene verläuft, eine Dichteinrichtung 51 aufweist, die bei in die Funktionsposition eingebautem Filterelement 23 und am Filterkopf 5 angebrachtem Deckelteil 35 durch Anlage an diesem die Filtervorrichtung nach außen abdichtet. Vorzugsweise ist auf der unteren, freien Stirnseite des Kranzes 43 eine weitere, durchgehend verlaufende Dichteinrichtung (nicht dargestellt), die vorzugsweise parallel zu der ersten ringförmigen Dichteinrichtung 51 verläuft, angeordnet. Diese dichtet über die freie Stirnseite der topfartigen Umhausung 3, 5 deren Inneres gleichfalls gegenüber der Umgebung ab.

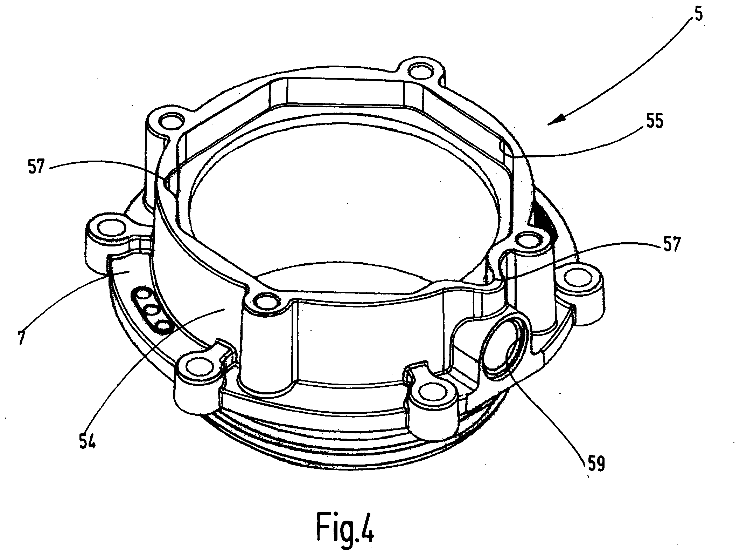

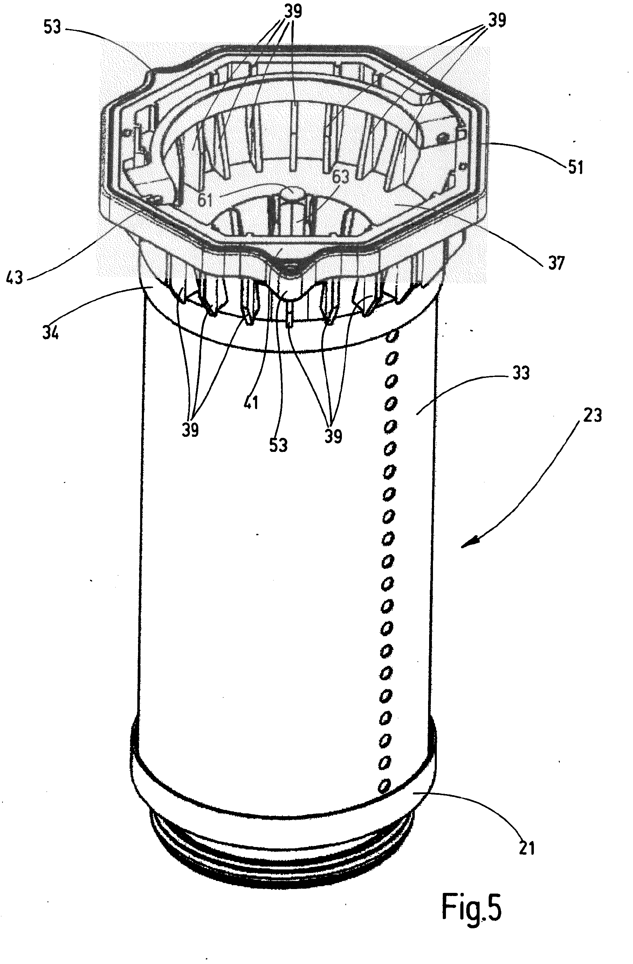

Als Anlageteile, die codierte Schlüsselteile bilden, sind am Außenumfang des Kranzes 43 in Radialrichtung vorstehende Nasen 53 vorgesehen. Der Filterkopf 5 bildet an der Innenseite eines oberhalb des Befestigungsflansches 7 befindlichen, nach oben offenen Wandteils 54 eine Aufnahme 55 (siehe insbesondere Fig. 4) für den Kranz 43 der Endkappe 34. Als Schlossteile für den Eingriff der Nasen 53 des Kranzes 43 sind in der Aufnahme 55 vertiefte Nasenaufnahmen 57 in der Innenwand ausgebildet. Als weiteres codiertes Schlossteil ist die Innenwand der Aufnahme 55 unrund und folgt beim gezeigten Beispiel der Außenform des Kranzes 43 in Form des achteckigen Polygonzuges. Beim gezeigten Ausführungsbeispiel sind am Kranz 43 zwei Nasen 53 vorgesehen (Fig. 7), denen in der Aufnahme 55 des Filterkopfes 5 zwei Nasenaufnahmen 57 zugeordnet sind, von denen eine auf eine seitliche Wandöffnung 59 ausgerichtet ist, die in dem Wandteil 54 des Filterkopfes 5 vorgesehen und mit einem Innengewinde versehen ist. In entsprechender Weise, wie dies bei der bekannten Filtervorrichtung in Fig. 4 des genannten Dokuments gezeigt ist, ist in die Öffnung 59 eine Differenzdruck-Messeinrichtung (nicht dargestellt) derart einschraubbar, dass an ihrem einen Messeingang der Druck der Filtratseite anliegt. Die Übermittlung des Momentandrucks der Unfiltratseite zum anderen Messeingang der Differenzdruck-Messeinrichtung erfolgt in gleicher Weise wie bei der im genannten Dokument gezeigten Lösung über Leitungen und Leitungsabschnitte in der in der Aufnahme 55 des Filterkopfes 5 eingesetzten Endkappe 34. Die bei der bekannten Lösung (s. Fig. 3) mit 60 und 61 bezeichneten Leitungen der dortigen Endkappe führen vom den Druck der Unfiltratseite führenden inneren Filterhohlraum zu einem radial vorstehenden Wandteil, über das der Momentandruck an die Messeinrichtung weitergeleitet wird. Bei der vorliegenden Erfindung ist diese Funktion der Übertragung des Momentandrucks durch diejenige, der Codierung zugehörige Nase 53 übernommen, die der mit der Anschlussöffnung 59 fluchtenden Nasenaufnahme 57 zugeordnet ist. In dieser Nasenaufnahme 57 ist ein in der Zeichnung nicht sichtbarer Verbindungskanal gebildet, der zum Messeingang für den Momentandruck der Unfiltratseite führt. Die diesen Momentandruck führenden Leitungsabschnitte der Endkappe 34, die in den Fig. 2, 3 sowie 5 und 6 sichtbar sind, sind dort mit 61 und 63 bezeichnet.

Wie aus Fig. 1 und 2 zu ersehen ist, ist das Bypassventil 52 am Deckelteil 35 angeordnet. Dieses weist an seiner Unterseite einen koaxialen Führungszylinder 65 auf, in dem der Ventilkörper 49 mit seinem hohlen Schaft 67 axial beweglich geführt ist. Im hohlen Schaft 67 befindet sich eine Druckfeder 69, die den Ventilkörper 49 derart vorspannt, dass er bei am Filterkopf 5 angebrachtem Deckelteil 35 am Rand der Öffnung 47 des das Führungsteil 45 bildenden Konuskörpers dichtend anliegt. Bei den Schließdruck übersteigendem Momentandruck der Unfiltratseite im Hohlraum 27 gibt das Bypassventil 52 den Fluidweg zur Innenseite des Konuskörpers der Endkappe 34 und über die Lücken zwischen den Stegen 39 zur Filtratseite hin frei.

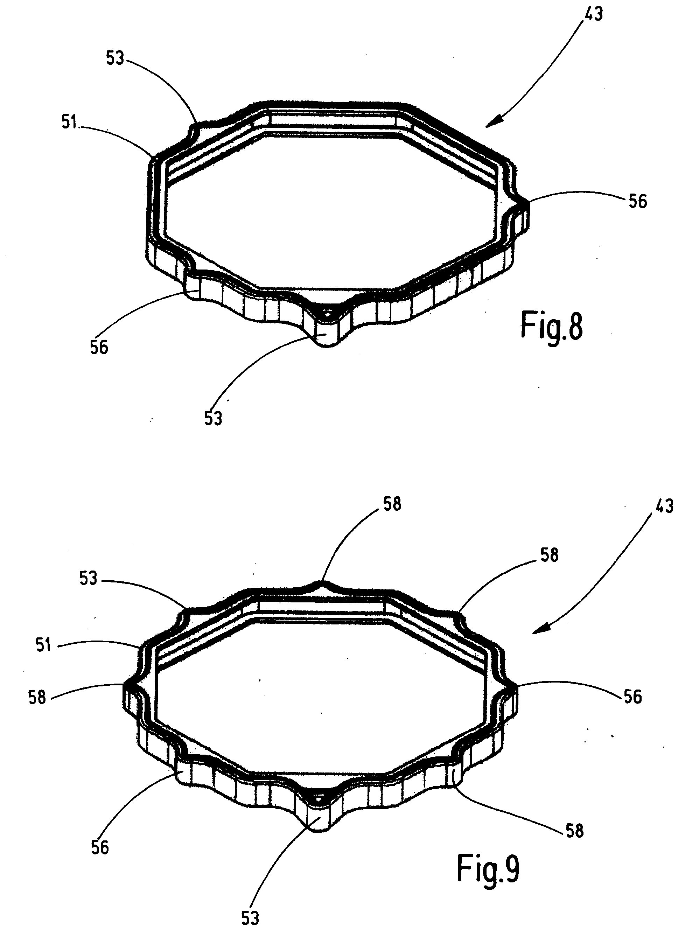

Während die Fig. 1 bis 7 das Beispiel der Codierung mit nur zwei Nasen 53, von denen die eine (in Fig. 7 untenliegende) Nase 53 als Funktionsteil für die Übermittlung des Momentandrucks der Unfiltratseite dient, und mit einem eine weitere Codierung bildenden achteckigen Polygonzug des Außenumfangs des Kranzes 43 zeigt, versteht sich, dass eine praktisch unbegrenzte Vielzahl von Codierungen möglich ist. Beispielhaft zeigt die Fig. 8 den Kranz 43, der zusätzlich zu den Nasen 53, von denen die eine gleichzeitig ein Funktionsmittel bildet, zwei zusätzliche Nasen 56 aufweist, die in Umfangsrichtung in unterschiedlich großen Abständen voneinander angeordnet sind. Die Fig. 9 zeigt ein Beispiel, bei dem vier weitere Nasen 58 vorgesehen sind. Wiederum bildet eine Nase 53 ein Funktionsmittel. Die Aufnahme 55 im Filterkopf 5 ist beim gezeigten Beispiel mit zwei Nasenaufnahmen 57 versehen. Die Filterköpfe 5 können mit Nasenaufnahmen in einer Anzahl versehen sein, dass sich in der gleichen Aufnahme 55 mehrere voneinander verschiedene Arten von Filterelementen 23 aufnehmen lassen, die mit einer geringeren Anzahl von Nasen 53, 56, 58 versehen sind, jedoch die zulässige Codierung aufweisen. Das bei der Erfindung vorgesehene Codiersystem verhindert nicht nur Fehlbestückungen der Filtervorrichtung, sondern bildet auch eine formschlüssige Verdrehsicherung für die eingebauten Filterelemente 23.

Da die jeweils eingesetzte Dichteinrichtung 51 der Form der Schlüsselteile nachfolgt, die nasenartig und einstückig am Außenumfang des Kranzes 43 vorstehen, würde beim Abbrechen eines der Schlüsselteile die Dichtwirkung unmittelbar verloren gehen. So kann man bereits von Anfang an; aber auch später im Betrieb der Filtervorrichtung feststellen, dass es voraussichtlich zu Fehlfunktionen kommen wird.

## Patentansprüche

1. Filtervorrichtung, zumindest bestehend aus einer Umhausung (3, 5) und einem darin austauschbar aufnehmbaren Filterelement (23), das mit mindestens zwei Schlüssel- (53, 56, 58) oder Schlossteilen in korrespondierend ausgebildete Schloss- (57) bzw. Schlüsselteile der Umhausung (3, 5) eingreift, die jeweils paarweise einander zugeordnet in Eingriff miteinander als
- Codiermittel und/oder
- Festlegemittel und/oder
- Funktionsmittel und/oder
- Nachbauschutzmittel
dienen, wobei die jeweiligen Schlüssel- (53, 56, 58) oder Schlossteile des Filterelements (23) an einem Kranz (43) angeordnet sind, der an eine Endkappe (34) des Filterelements (23) anschließt und bevorzugt einstückiger Bestandteil der Endkappe (34) ist, wobei die Umhausung (3, 5) für die Aufnahme des Kranzes (43) eine der Außenkontur dieses Kranzes (43) nachfolgende Aufnahme (55) aufweist, wobei der Kranz (43) an mindestens einer seiner freien Stirnseiten eine Dichteinrichtung (51) aufweist, die mit einem die Umhausung (3, 5) verschließenden Deckelteil (35) als Teil desselben und/oder mit Teilen der Umhausung (3, 5) selbst das Innere (27) der Filtervorrichtung gegenüber der Umgebung, zumindest in diesem Bereich der Anlage, abdichtet, **dadurch gekennzeichnet, dass** die jeweils eingesetzte Dichteinrichtung (51) der Form der Schlüsselteile (53, 56, 58) nachfolgt.

2. Filtervorrichtung nach Anspruch 1 oder 2, **dadurch gekennzeichnet, dass** das jeweilige Schlüssel- oder Schlossteil des Kranzes (43) aus voroder rückspringenden Anlageteilen (53, 56, 58) besteht, die in rück- bzw. vorspringende Anlageteile (57) der Aufnahme (55) der Umhausung (3, 5) bei aufgenommenem Filterelement (23) eingreifen und/ oder dass zusätzlich oder alternativ als weiteres Schlüssel- und/oder Schlossteil die Außenkontur des Kranzes (43) sowie die Aufnahme (5) der Umhausung (3, 5), zumindest teilweise, einem aufeinander abgestimmten Polygonzug nachfolgen.

3. Filtervorrichtung nach einem der vorstehenden Ansprüche, **dadurch gekennzeichnet, dass** der Kranz (43) über eine stegartige Verbindungseinrichtung (39) mit der einen Endkappe (34) verbunden ist und in axialer sowie radialer Richtung über die an der Endkappe (34) für das Elementmaterial (29) gebildete Aufnahme (37) vorsteht.

4. Filtervorrichtung nach Anspruch 3, **dadurch gekennzeichnet, dass** der Kranz (43) auswechselbar gegen denselben oder einen anderen Kranz (43) mit anders ausgebildeten und/oder angeordneten Schlüssel- (53, 56, 58) oder Schlossteilen an der stegartigen Verbindungseinrichtung (39) des Filterelements (23) festlegbar ist.

5. Filtervorrichtung nach einem der vorstehenden Ansprüche, **dadurch gekennzeichnet, dass** die jeweils der Form des Kranzes (43) angepasste Aufnahme (55) der Umhausung (3, 5) tauschbar an dieser festgelegt ist.

6. Filtervorrichtung nach einem der vorstehenden Ansprüche, **dadurch gekennzeichnet, dass** der Kranz (43) des Filterelements (23) einen in sich geschlossenen Außenring bildet, der außenumfangsseitig das jeweilige Schlüssel- (53, 56, 58) oder Schlossteil vor- bzw. rückspringend aufweist und/oder als Polygonzug realisiert ist.

7. Filtervorrichtung nach einem der vorstehenden Ansprüche, **dadurch gekennzeichnet, dass** als Schlüsselteile vorspringende Nasen (53, 56, 58) am Kranz (43) vorgesehen sind, die in korrespondierend ausgebildete, rückspringende Nasenaufnahmen (57) in der Aufnahme (55) der Umhausung (3, 5) aufnehmbar sind.

8. Filtervorrichtung nach einem der vorstehenden Ansprüche, **dadurch gekennzeichnet, dass** als Codiermittel für eine Art von Filterelement (23) bestimmte Schlüssel- (53,56, 58) und/oder Schlossteile zum Einsatz kommen, die sich zumindest teilweise von Schlüssel- (53, 56, 58) und/oder Schlossteilen einer mindestens weiteren Art von Filterelement (23) unterscheiden, und dass die korrespondierenden Schloss-(57) und/oder Schlüsselteile der Aufnahme (55) der Umhausung (3, 5) derart in einer Mehrzahl vorhanden sind, dass sich zumindest zwei voneinander verschiedene Arten von Filterelementen (23) in der gleichen Umhausung (3, 5) aufnehmen lassen.

9. Filtervorrichtung nach einem der vorstehenden Ansprüche, **dadurch gekennzeichnet, dass** als Festlegemittel die Schlüssel- (53, 56, 58) oder Schlossteile des auswechselbaren Filterelements (23) in die korrespondierend ausgebildeten Schloss- (57) bzw. Schlüsselteile an der Umhausung (3, 5) derart eingreifen, dass eine axiale und/oder radiale Lagesicherung des Filterelements (23) in der Umhausung (3, 5) erreicht ist.

10. Filtervorrichtung nach einem der vorstehenden Ansprüche, **dadurch gekennzeichnet, dass** als Funktionsmittel solche zur Übertragung von Fluid, Energie oder Information dienen, vorzugsweise in Form von Leitungen oder Leitungsabschnitten (61, 63), die über einzelne Schlüssel- (53) oder Schlossteile von Filterelement (23) und/oder dessen Endkappe (34) führen, die die Funktion von Anschlussteilen, auch in Form von Stecker- und Buchsenteilen, übernehmen.

11. Filtervorrichtung nach einem der vorstehenden Ansprüche, **dadurch gekennzeichnet, dass** als Nachbauschutz die Schlüssel- und/oder Schlossteile (57) der Umhausung (3, 5) nur den Einbau von Filterelementen (23) mit korrespondierend ausgebildeten Schloss- bzw. Schlüsselteilen (53, 56, 58) zulassen.

12. Filtervorrichtung nach einem der vorstehenden Ansprüche, **dadurch gekennzeichnet, dass** für ein Filterelement (23) mindestens zwei voneinander verschiedene Mittel vorgesehen sind, wie ein Funktions- und ein Festlegemittel.

13. Filtervorrichtung nach einem der vorstehenden Ansprüche, **dadurch gekennzeichnet, dass** ein von der Kontur her gleich aussehendes Mittel (53) des Filterelements (23) mehrere Aufgaben wahrnimmt, wie die eines Codier-, eines Festlege-, eines Funktions- oder eines Nachbauschutzmittels.

14. Filterelement, insbesondere vorgesehen für eine Filtervorrichtung nach einem der vorstehenden Ansprüche, mit einem sich zwischen zwei Endkappen (21, 34) erstreckenden Elementmaterial (29), wobei eine Endkappe (34) über eine stegartige Verbindungseinrichtung (39) einen ihr gegenüber axial und radial vorstehenden Kranz (43) aufweist, **dadurch gekennzeichnet, dass** am Außenumfang des Kranzes (43) zumindest zwei Schlüssel- (53, 56, 58) und/oder Schlossteile angeordnet sind als
- Codiermittel und/oder
- Festlegemittel und/oder
- Funktionsmittel und/oder
- Nachbauschutzmittel,
wobei die jeweiligen Schlüssel- (53, 56, 58) oder Schlossteile des Filterelements (23) an einem Kranz (43) angeordnet sind, der an eine Endkappe (34) des Filterelements (23) anschließt und bevorzugt einstückiger Bestandteil der Endkappe (34) ist, wobei der Kranz (43) an mindestens einer seiner freien Stirnseiten eine Dichteinrichtung (51) aufweist, **dadurch gekennzeichnet, dass** die jeweils eingesetzte Dichteinrichtung (51) der Form der Schlüsselteile (53, 56, 58) nachfolgt.

## Claims

1. Filter device, at least consisting of an enclosure (3, 5) and a filter element (23) that can be replaceably received therein, said filter element having at least two key (53, 56, 58) or lock parts engaging in correspondingly shaped lock (57) or key parts in the enclosure (3, 5), which, when engaged in pairs with respect to one another, act together as
- coding means and/or
- fixing means and/or
- functional means and/or
- means to protect against replication,
the respective key (53, 56, 58) or lock parts of the filter element (23) being arranged on a ring (43) which is attached to an end cap (34) of the filter element (23) and preferably forms a monobloc part of the end cap (34), the enclosure (3, 5) for receiving the ring (43) comprising a receptacle (55) that follows the outer contour of said ring (43), which comprises a sealing apparatus (51) on at least one of its free end faces, which, with a lid part (35) sealing the enclosure (3, 5) as a part thereof and/or with parts of the enclosure (3, 5) itself, seals the inside (27) of the filter device from the environment, at least in this region of the system, **characterised in that** the respective sealing apparatus (51) used follows the shape of the key parts (53, 56, 58).

2. Filter device according to either claim 1 or claim 2, **characterised in that** the respective key or lock part of the ring (43) consists of protruding or recessed system parts (53, 56, 58), which engage in recessed or protruding system parts (57) of the receptacle (55) of the enclosure (3, 5) when the filter element (23) is received and/or **in that**, additionally or alternatively, as a further key and/or lock part, the outer contour of the ring (43) and the receptacle (5) of the enclosure (3, 5) at least partially follow a matching polygon line.

3. Filter device according to any one of the preceding claims, **characterised in that** the ring (43) is connected via a web-like connecting apparatus (39) to one end cap (34) and protrudes in an axial and radial direction over the receptacle (37) formed on the end cap (34) for the element material (29).

4. Filter device according to claim 3, **characterised in that** the ring (43) can be fixed such that it can be replaced by the same or a different ring (43) with differently shaped and/or arranged key (53, 56, 58) or lock parts on the web-like connecting apparatus (39) of the filter element (23).

5. Filter device according to any one of the preceding claims, **characterised in that** the receptacle (55) of the enclosure (3, 5), said receptacle being adapted to the shape of the ring (43) in each case, is fixed thereto such that it can be replaced.

6. Filter device according to any one of the preceding claims, **characterised in that** the ring (43) of the filter element (23) forms a closed outer ring which comprises the respective key (53, 56, 58) or lock part in a protruding or recessed manner on its outer circumference and/or is created as a polygon line.

7. Filter device according to any one of the preceding claims, **characterised in that** protruding lugs (53, 56, 58) are provided on the ring (43) as key parts, said lugs being able to be received in correspondingly shaped recessed lug holders (57) in the receptacle (55) of the enclosure (3, 5).

8. Filter device according to any one of the preceding claims, **characterised in that** specific key (53, 56, 58) and/or lock parts are used as coding means for a type of filter element (23), said parts being at least partially different from key (53, 56, 58) and/or lock parts of one at least further type of filter element (23), and **in that** the corresponding lock (57) and/or key parts of the receptacle (55) of the enclosure (3, 5) are provided in multiples such that at least two different types of filter elements (23) can be received in the same enclosure (3, 5).

9. Filter device according to any one of the preceding claims, **characterised in that** the key (53, 56, 58) or lock parts of the replaceable filter element (23) engage as fixing means in the correspondingly shaped lock (57) or key parts on the enclosure (3, 5) such that axial and/or radial positional stability of the filter element (23) in the enclosure (3, 5) is achieved.

10. Filter device according to any one of the preceding claims, **characterised in that** means to transfer fluid, energy or information are used as functional means, preferably in the form of pipes or pipe sections (61, 63), which lead via individual key (53) or lock parts of the filter element (23) and/or the end cap (34) thereof, and assume the function of connecting parts, including in the form of plug and socket parts.

11. Filter device according to any one of the preceding claims, **characterised in that**, as means to protect against replication, the key and/or lock parts (57) of the enclosure (3, 5) only allow filter elements (23) with correspondingly-shaped lock or key parts (53, 56, 58) to be fitted.

12. Filter device according to any one of the preceding claims, **characterised in that** at least two different means are provided for a filter element (23), such as a functional means and a fixing means.

13. Filter device according to any one of the preceding claims, **characterised in that** a means (53) of the filter element (23), which has the same appearance in terms of its contour, can perform a plurality of tasks, such as a coding means, a fixing means, a functional means or a means to protect against replication.

14. Filter element, in particular provided for a filter device according to any one of the preceding claims, comprising an element material (29) extending between two end caps (21, 34), one end cap comprising a ring (43) protruding axially and radially in relation thereto by means of a web-like connecting apparatus (39), **characterised in that** at least two key (53, 56, 58) and/or lock parts are arranged on the outer circumference of the ring (43) as
- coding means and/or
- fixing means and/or
- functional means and/or
- means to protect against replication,
the respective key (53, 56, 58) or lock parts of the filter element (23) being arranged on a ring (43), which is attached to an end cap (34) of the filter element (23) and preferably forms a monobloc part of the end cap (34), the ring (43) comprising a sealing apparatus (51) on at least one of its free end faces, **characterised in that** the respective sealing apparatus (51) used follows the shape of the key parts (53, 56, 58).

## Revendications

1. Dispositif de filtration, au moins constitué d'une enveloppe (3, 5) et d'un élément (23) de filtre, qui peut y être reçu de manière échangeable et qui pénètre par au moins deux parties de clé (53, 56, 58) ou de serrure dans des parties de serrure (57) ou de clé, constituées de manière correspondante, de l'enveloppe (3, 5), qui, associées les unes aux autres par paire respectivement en prise l'une avec l'autre, servent
- de moyen de codage et/ou
- de moyen de fixation et/ou
- de moyen fonctionnel et/ou
- de moyen de protection vis-à-vis de l'imitation
dans lequel les parties respectives de clé (53, 56, 58) ou de serrure de l'élément (23) de filtre sont disposées sur une couronne (43), qui se raccorde à une coiffe (34) d'extrémité de l'élément (23) de filtre et qui de préférence est une partie constitutive d'une seule pièce de la coiffe (34) d'extrémité, l'enveloppe (3, 5) ayant pour la réception de la couronne (43) un logement (55) suivant le contour extérieur de cette couronne (43), la couronne (43), ayant à au moins l'un de ses côtés frontaux libres, un dispositif (51) d'étanchéité, qui par une partie (35) de couvercle fermant l'enveloppe (3, 5) en tant que partie de celui-ci et/ou par des parties de l'enveloppe (3, 5) elle- même rend l'intérieur (27) du dispositif de filtration étanche par rapport à l'atmosphère extérieure au moins dans cette région du montage, **caractérisé en ce que** le dispositif (51) d'étanchéité utilisé respectivement suit la forme des parties (53, 56, 58) de clé.

2. Dispositif de filtration suivant la revendication 1 ou 2, **caractérisé en ce que** la partie respective de clé ou de serrure de la couronne (43) est constituée de parties (53, 56, 58) de montage en saillie ou en retrait, qui pénètrent dans les parties (57) de montage en retrait ou en saillie des logements (55) de l'enveloppe (3, 5) lorsque l'élément (23) de filtre est reçu et/ou **en ce que**, en outre ou en variante, comme autre partie de clé et/ou de verrou ; le contour extérieur de la couronne (3) ainsi que le logement (5) de l'enveloppe (3, 5) suivent au moins en partie un trajet polygonal adapté l'un à l'autre.

3. Dispositif de filtration suivant l'une des revendications précédentes, **caractérisé en ce que** la couronne est reliée à la une coiffe (34) d'extrémité par un dispositif (39) de liaison de type à nervure et est en saillie dans la direction axiale ainsi que radiale du logement (37) formé sur la coiffe (34) d'extrémité pour le matériau (29) de l'élément.

4. Dispositif de filtration suivant la revendication 3, **caractérisé en ce que** la couronne (43) peut être fixée au dispositif (39) de liaison de type à nervure de l'élément (23) de filtre, avec possibilité d'être remplacée par elle-même ou par une autre couronne (43) ayant d'autres parties de clé (53, 56, 58) ou de serrure constituées et/ou disposées autrement.

5. Dispositif de filtration suivant l'une des revendications précédentes, **caractérisé en ce que** le logement (5), adapté respectivement à la forme de la couronne (43), de l'enveloppe (3, 5) peut être fixé à celle-ci avec possibilité de remplacement.

6. Dispositif de filtration suivant l'une des revendications précédentes, **caractérisé en ce que** la couronne (43) de l'élément (23) de filtre forme un anneau extérieur fermé en soi, qui a du côté du pourtour extérieur la partie respective de clé (53, 56, 58) ou de serrure en saillie ou en retrait et/ou qui est réalisé sous la forme d'un tracé polygonal.

7. Dispositif de filtration suivant l'une des revendications précédentes, **caractérisé en ce qu'**il est prévu comme partie de clé des becs (53, 56, 58) en saillie de la couronne (43), qui peuvent être reçus dans des logements (57) de becs en retrait, constitués de manière correspondante dans le logement (55) de l'enveloppe (3, 5),

8. Dispositif de filtration suivant l'une des revendications précédentes, **caractérisé en ce qu'**on utilise des parties de clé (53, 56, 58) et/ou de serrure déterminées comme moyen de codage pour un type d'élément (23) de filtre, qui se distinguent au moins en partie de parties de clé (53, 56, 58) et/ou de serrure d'au moins un autre type d'élément (23) de filtre et **en ce que** les parties (57) de verrou et/ou de clé correspondantes du logement (55) de l'enveloppe (3, 5) sont présents en une pluralité telle qu'au moins deux types différents l'un de l'autre d'éléments (23) de filtre peuvent reçus dans la même enveloppe (3, 5).

9. Dispositif de filtration suivant l'une des revendications précédentes, **caractérisé en ce que**, comme moyen de fixation, les parties de clé (53, 56, 58) ou de serrure de l'élément (23) de filtre échangeable pénètrent dans les parties de verrou ou de clé, constituées de manière correspondante, de l'enveloppe (3, 5) de manière à obtenir une fixation axiale et/ou radiale en position de l'élément (23) de filtre dans l'enveloppe (3, 5).

10. Dispositif de filtration suivant l'une des revendications précédentes, **caractérisé en ce que** servent de moyens fonctionnels ceux de transmission de fluide, d'énergie ou d'information, de préférence sous la forme de conduits ou de tronçons (61, 63) de conduit, qui passent par des parties individuelles de clé (53) ou de serrure de l'élément (23) de filtre et/ou de sa coiffe (34) d'extrémité, qui prennent en charge la fonction de parties de raccordement, également sous la forme de parties mâles et femelles.

11. Dispositif de filtration suivant l'une des revendications précédentes, **caractérisé en ce que**, comme protection vis-à-vis d'une imitation, les parties (57) de clé et/ou de serrure de l'enveloppe (3, 5) n'autorisent que le montage d'éléments (23) de filtre ayant des parties (53, 56, 58) de serrure ou de clé constituées de manière correspondante.

12. Dispositif de filtration suivant l'une des revendications précédentes, **caractérisé en ce qu'**il est prévu pour un élément (23) de filtre au moins deux moyens différents l'un de l'autre, comme un moyen fonctionnel et un moyen de fixation.

13. Dispositif de filtration suivant l'une des revendications précédentes, **caractérisé en ce qu'**un moyen (53), paraissant de même contour, de l'élément (23) de filtre assume plusieurs tâches, comme celles d'un moyen de codage, d'un moyen de fixation, d'un moyen fonctionnel ou d'un moyen de protection vis-à-vis de l'imitation.

14. Elément de filtre, prévu notamment pour un dispositif de filtration suivant l'une des revendications précédentes, comprenant un matériau (29) d'élément s'étendant entre deux coiffes (21, 34) d'extrémité, une coiffe (34) d'extrémité ayant par un dispositif (39) de liaison de type à nervure une couronne (43) en saillie axialement et radialement par rapport à elle, **caractérisé en ce que** sur le pourtour extérieur de la couronne (43) sont disposées au moins deux parties de clé (53, 56, 58) et/ou de serrure comme
- moyen de codage et/ou
- moyen de fixation et/ou
- moyen fonctionnel et/ou
- moyen de protection vis-à-vis de l'imitation
dans lequel les parties respectives de clé (53, 56, 58) ou de serrure de l'élément (23) de filtre sont disposées sur une couronne (43), qui se raccorde à une coiffe (34) d'extrémité de l'élément (23) de filtre et qui est de préférence une partie constitutive d'une seule pièce de la coiffe (34) d'extrémité, la couronne (43) ayant un dispositif (51) d'étanchéité à au moins l'un de ses côtés frontaux libres, **caractérisé en ce que** le dispositif (51) d'étanchéité utilisé respectivement suit la forme des parties (53, 56, 58) de clé.
